# DEMANDE DE BREVET EUROPEEN

(11) **EP 4 365 975 A1**
(43) Date de publication de la demande: **08.05.2024**
(21) Numéro de dépôt: 23206164.8
(22) Date de dépôt: 26.10.2023
(51) Int. Cl.: H01M 4/13, H01M 4/139, H01M 4/04, H01M 4/131, H01M 4/136, H01M 4/1391, H01M 4/1397, H01M 4/485, H01M 4/58, H01M 4/60, H01M 6/50, H01M 10/052, H01M 10/054

(54) **PRÉPARATION D'UN MATÉRIAU ACTIF POUR ÉLECTRODE DE RÉFÉRENCE**

(30) Priorité: 27.10.2022 FR 2211201
(71) Demandeur: Commissariat à l'énergie atomique et aux énergies alternatives, 75015 Paris (FR)
(72) Inventeur: GUTEL, Thibaut, 38054 Grenoble cedex 09 (FR); BOUVET, Justin, 38054 Grenoble cedex 09 (FR); GUTEL, Elise, 38054 Grenoble cedex 09 (FR); GENIES, Sylvie, 38054 Grenoble cedex 09 (FR)
(74) Mandataire: Cabinet Nony

(57) **Abrégé**

La présente invention concerne un procédé de préparation d'un matériau actif pour une électrode de référence, comprenant au moins les étapes consistant en :
(1) disposer d'au moins un composé électro-actif sous sa forme réduite, et dont la réaction rédox associée présente un potentiel électrochimique constant pour des états de charge intermédiaire ;
(2) disposer dudit composé électro-actif sous sa forme oxydée ; et
(3) mélanger les formes réduite et oxydée dudit composé électro-actif dans des proportions ajustées pour obtenir un matériau dont la composition correspond à un état de charge intermédiaire.

Elle concerne également un matériau actif pour électrode de référence obtenu selon ce procédé, et son utilisation pour la préparation d'une électrode de référence.

## Description

### Domaine technique

La présente invention concerne le domaine des systèmes de stockage électrochimique, plus précisément le domaine des dispositifs électrochimiques de type accumulateurs ou batteries métal-ion, notamment des batteries sodium-ion, lithium-ion, potassium-ion, magnésium-ion ; des batteries lithium-soufre ou lithium-air ; et supercondensateurs, par exemple des supercondensateurs hybrides au potassium.

Elle vise plus précisément à proposer une nouvelle méthode de préparation d'une électrode de référence directement fonctionnelle et utilisable dans une cellule d'un tel système de stockage électrochimique, sans nécessiter de recourir à une activation préalable de l'électrode par voie électrochimique.

### Technique antérieure

Les dispositifs électrochimiques de type batteries, par exemple batteries au lithium, et supercondensateurs, trouvent de multiples applications, notamment dans l'alimentation des systèmes embarqués de faible épaisseur, comme les cartes de crédit, les étiquettes intelligentes, dans l'alimentation des téléphones mobiles, le stockage de l'énergie de cellules photovoltaïques, ou encore dans l'alimentation des véhicules électriques.

Divers systèmes de stockage électrochimiques ou générateurs électrochimiques ont été développés, tels que des batteries métal-ion, notamment des batteries sodium-ion, lithium-ion, potassium-ion, magnésium-ion ; des batteries lithium-soufre ou lithium-air ; et plus récemment des supercondensateurs.

Ces générateurs électrochimiques, par exemple au lithium, fonctionnent classiquement sur le principe d'insertion et désinsertion (ou intercalation-désintercalation) d'un métal, tel que le lithium, sur au moins une électrode. En particulier, dans un accumulateur lithium-ion, les cations Li⁺ font ainsi des allers-retours entre les électrodes, respectivement positive et négative, à chaque charge et décharge de l'accumulateur. Le matériau actif de l'électrode positive est capable de libérer des ions lithium au moment de la charge et d'incorporer des ions lithium au moment de la décharge.

Les supercondensateurs constituent des dispositifs de stockage d'énergie permettant d'obtenir une densité de puissance et une densité d'énergie intermédiaires entre celles fournies par des batteries électrochimiques et par des condensateurs électrolytiques classiques. En outre, ils restituent plus rapidement de l'énergie qu'une batterie électrochimique. Dans les supercondensateurs standards, dits encore « symétriques », les deux électrodes (électrode positive et électrode négative) sont toutes deux à base de carbone activé et l'électrolyte est classiquement à base de sel d'ammonium, typiquement du tétrafluoroborate de tétraéthylammonium (Et₄NBF₄) dans l'acétonitrile ou dans du carbonate de propylène. Il a également été développé des supercondensateurs, dits « hybrides » ou « asymétriques », se situant entre les supercondensateurs symétriques classiquement utilisés à base de carbone activé et les batteries. Une des électrodes, classiquement l'électrode positive, est à base de carbone activé ; l'autre électrode, classiquement l'électrode négative, étant constituée à partir d'un matériau de batterie rechargeable. Le stockage de charges dans un supercondensateur hybride se produit au niveau de l'électrode négative par le biais d'une réaction redox, tandis que le stockage de charges au niveau de l'électrode positive se produit par le biais de la formation d'une double-couche électrochimique.

Il est important, pour les systèmes de stockage électrochimiques, qu'il s'agisse des batteries ou des supercondensateurs, de pouvoir connaître et suivre l'évolution du potentiel de chaque électrode indépendamment et par rapport à une électrode de potentiel connu, lors du fonctionnement de la cellule électrochimique. En particulier, pour des cellules mettant en oeuvre des électrolytes à base de solvant(s) organique(s), il importe que la cellule du système électrochimique ne fonctionne pas en dehors de la plage de stabilité électrochimique du ou desdits solvants organiques, pour ne pas engendrer de dégradations et notamment la production de gaz. De même, il est important de contrôler, via la limitation en potentiel, l'état de lithiation de certains composés tels que les oxydes lamellaires LiₓMO₂ dont la structure est instable pour x<0,5 (cas du LiCoO₂) ou x<0,2 (LiₓMO₂ avec M=Ni, Co, Mn à faible teneur en Co), ou encore éviter l'électrodépôt de lithium à l'état métallique à l'électrode négative à des potentiels inférieurs à 0V *vs* Li⁺/Li. Afin de contrer l'apparition de tout phénomène indésirable, il importe de pouvoir connaître et suivre l'évolution du potentiel de chaque électrode, lors du fonctionnement de la cellule électrochimique.

Pour cela, il est souhaitable de pouvoir introduire une électrode dite de référence au sein du système électrochimique. Une électrode de référence doit présenter un potentiel stable et connu, permettant de connaître à chaque instant le potentiel de chacune des électrodes positive et négative du système.

D'une manière générale, comme répertorié par exemple dans le document Cengiz *et al.* [1] ou proposé dans les documents US 2009/0104510 et US 9,379,418, les électrodes de référence proposées pour des systèmes de stockage électrochimique, notamment pour des batteries métal-ion, telles que des batteries lithium-ion, sodium-ion, calcium-ion, lithium-ion, potassium-ion, magnésium-ion, ou pour des supercondensateurs, reposent sur la mise en oeuvre, comme matière active d'électrode :
- de métaux purs, tels que le lithium, le sodium ou le potassium, ou des alliages à base de lithium (par exemple, LiₓSn, LiₓBi, LiₓAu, LiₓIn, LiₓSi, LiₓAl, etc.), respectivement à base de sodium, de potassium, etc. ; et
- de matériaux d'intercalation/insertion de type LiMO₂ avec M représentant Co, Ni ou Mn ; LiM'₂O₄ avec M' représentant Ni ou Mn ; LiM"PO₄ avec M" représentant Fe, Co, Mn ou Ni ; ou de type L₁₄T₁₅O₁₂.

Pour être adaptés à une mise en oeuvre comme électrode de référence, les composés doivent présenter, lors du processus de charge/décharge galvanostatique, un plateau de potentiel (réaction redox associée présentant un potentiel électrochimique constant), et leur potentiel thermodynamique doit être indépendant de la concentration en sel de l'électrolyte.

Pour ce qui est des métaux et alliages, ils sont directement utilisables dans un système à trois électrodes, mais présentent une instabilité potentielle au cours du temps/cyclage, en raison notamment de leur potentiel thermodynamique très bas. En effet, leur pouvoir réducteur induit une forte réactivité avec les électrolytes et leur potentiel inférieur à celui du couple H₂O/H₂ ou O₂/H₂O (ce qui autorise des réactions spontanées avec H₂O et O₂) nécessite un contrôle de l'atmosphère lors des étapes d'assemblage. De plus, le potentiel thermodynamique d'une électrode à base de métaux purs est susceptible de varier en fonction des variations de concentration en ions lithium dans l'électrolyte. Certes, on peut considérer que la concentration moyenne en ions lithium dans l'espace inter-électrodes ne change pas. Toutefois, des gradients de concentration peuvent s'établir, plus importants lorsque les courants appliqués sont importants, et sont donc susceptibles de faire varier le potentiel thermodynamique de l'électrode de référence. En outre, il y a également un risque de variation du potentiel de l'électrode de référence au cours du vieillissement, car la concentration des ions lithium dans l'électrolyte est susceptible de varier du fait des mécanismes de dégradation (assèchement de la phase liquide).

Ces inconvénients ne concernent pas les autres matériaux d'électrodes précités, pour lesquels le potentiel thermodynamique de l'électrode est fixé par le nombre de sites actifs/inactifs ou la concentration en lithium (respectivement, en sodium, potassium) dans l'alliage. Les matériaux présentant un large plateau de potentiel en fonction du taux d'insertion sont particulièrement avantageux, puisqu'ils permettent une stabilité du potentiel, indépendamment des changements d'état de lithiation du matériau susceptibles d'intervenir au cours du vieillissement.

Les matériaux d'insertion, par exemple le L₁₄T₁₅O₁₂ ou le LiFePO₄, caractérisés par un comportement biphasique, sont donc privilégiés. En particulier, la stabilité chimique, thermique et électrochimique du LiFePO₄ (ou LFP), ainsi que son potentiel moyen d'oxydoréduction plus élevé que le potentiel des autres matériaux redox précités et constant sur une large fenêtre de taux de lithiation, font du LFP un matériau d'intérêt pour des électrodes de référence.

Plus récemment, le CEA a également proposé la mise en oeuvre, pour la préparation d'électrodes de référence, de matériaux organiques électro-actifs de type P (donneur d'électrons) ou de type N (accepteur d'électrons).

Cependant, les électrodes à base des matériaux précités (matériaux d'insertion/d'intercalation du lithium, ou matériaux de type P ou N) requièrent d'être préalablement « activées », afin d'être opérationnelles comme électrodes de référence. En effet, ces matériaux électroactifs ne présentent un potentiel électrochimique fixe que pour des états de charge (états d'oxydation/réduction, ou encore états de lithiation) intermédiaires (d'environ 5% à 95% d'état de charge (SoC)), ce qui implique de conditionner au préalable les électrodes afin d'atteindre le plateau de potentiel (généralement, à environ 50% de SoC). Cette étape complexifie la préparation et la mise en oeuvre de ces électrodes de référence. A l'heure actuelle, l'activation des électrodes de référence est exclusivement réalisée électrochimiquement. Plusieurs méthodes pour cette activation électrochimique des électrodes existent, les plus courantes consistant à :
(1) charger ou décharger partiellement l'électrode de référence dans un premier dispositif à deux électrodes (par exemple, en demi-pile avec une contre-électrode de lithium), puis démonter l'assemblage afin de récupérer l'électrode de référence « activée », éventuellement rincer celle-ci, avant de l'insérer dans la cellule électrochimique à laquelle elle est destinée. Toutefois, dans le cadre de cette variante, l'étape de transposition de l'électrode d'une cellule à une autre induit un risque de détérioration de l'électrode de référence.
(2) réaliser une charge ou décharge partielle de l'électrode de référence au niveau d'un montage à trois électrodes, directement au sein de la cellule électrochimique à laquelle l'électrode de référence est destinée, en connectant, dans un premier stade, l'électrode de référence en tant qu'électrode de travail puis, après activation, en réalisant la connexion à trois électrodes avec l'électrode de référence.

Cette approche, si elle permet d'éviter l'étape de démontage requise dans la première variante précitée, n'est toutefois pas sans présenter des inconvénients. De fait, l'étape d'activation a pour conséquence de consommer une partie de la capacité de la cellule, et le contrôle de l'état de charge de l'électrode de référence est délicat. De plus, cette approche requiert de connaître la quantité exacte de matière active déposée ou de réaliser une étape de quantification électrochimique (cycle de charge/décharge) pour connaître la capacité effective de l'électrode. Enfin, cette étape d'activation étant réalisée après l'étape de formation (premier(s) cycle(s) de charge/décharge) des cellules, il n'est pas possible d'avoir accès aux informations des potentiels durant la formation, alors qu'il s'agit d'une donnée intéressante.

### Exposé de l'invention

La présente invention vise précisément à proposer une nouvelle méthode de préparation des électrodes de référence, permettant de s'affranchir des inconvénients, discutés précédemment, liés à la nécessité d'activer au préalable l'électrode par voie électrochimique. Plus particulièrement, l'invention propose de préparer une électrode de référence, directement fonctionnelle (ou utilisable) au sein d'une cellule d'un système de stockage électrochimique, à partir d'un mélange, en particulier sous la forme d'une poudre, des formes oxydée et réduite d'un composé électro-actif dont la réaction rédox associée présente un potentiel électrochimique constant à des états de charge intermédiaire.

Ainsi, l'invention concerne, selon un premier de ses aspects, un procédé de préparation d'un matériau actif pour une électrode de référence, comprenant au moins les étapes consistant en :
(1) disposer d'un composé électro-actif sous sa forme réduite, et dont la réaction rédox associée présente un potentiel électrochimique constant (ou plateau de potentiel) pour des états de charge intermédiaire ;
(2) disposer dudit composé électro-actif sous sa forme oxydée ; et
(3) mélanger lesdites formes réduite et oxydée dudit composé électro-actif dans des proportions ajustées pour obtenir un matériau dont la composition chimique correspond à un état de charge intermédiaire.

De préférence, lesdits composés électro-actifs sous forme réduite et oxydée se présentent sous la forme de poudres, le matériau en étape (3) étant obtenu par mélange desdites poudres.

Ainsi, l'invention concerne plus particulièrement un procédé de préparation d'une poudre de matériau actif pour une électrode de référence, ledit procédé comprenant au moins les étapes consistant en :
(1) disposer d'une poudre de composé électro-actif sous sa forme réduite, et dont la réaction rédox associée présente un plateau de potentiel pour des états de charge intermédiaire ;
(2) disposer d'une poudre dudit composé électro-actif sous sa forme oxydée ; et
(3) mélanger lesdites poudres (1) et (2) dans des proportions ajustées pour obtenir une poudre dont la composition correspond à un état de charge intermédiaire.

L'invention se rapporte également au matériau actif pour une électrode de référence, de préférence sous la forme d'une poudre, obtenu selon le procédé décrit précédemment.

Plus particulièrement, l'invention concerne une poudre, utile comme matière active d'une électrode de référence, comprenant :
(1) des particules d'un composé électro-actif sous sa forme réduite, et dont la réaction rédox associée présente un plateau de potentiel pour des états de charge intermédiaire ;
(2) des particules dudit composé électro-actif sous sa forme oxydée ;
les proportions en particules (1) et (2) étant telles que la composition chimique de ladite poudre correspond à un état de charge intermédiaire.

Le « plateau de potentiel », associé à un composé ou matériau électro-actif, peut être identifié par un test en cyclage d'une électrode à base dudit composé ou matériau électro-actif, assemblée en demi-cellule ou en cellule complète, par exemple sous forme de pile-bouton, en opérant une charge ou une décharge en mode galvanostatique. Le potentiel électrochimique constant correspond au plateau de potentiel observé au niveau des courbes de charge/décharge à courant constant (par exemple, courbes de variation du potentiel E en fonction du temps ou en fonction de la capacité absolue ou spécifique massique lors d'un cyclage en mode galvanostatique). A noter qu'en cellule complète (c'est toujours le cas en demi-cellule avec une contre-électrode de lithium), ce plateau de potentiel n'est observable que si la contre-électrode utilisée (qui joue alors le rôle de référence) présente également un plateau de potentiel lors de sa charge/décharge à courant constant.

Le plateau de potentiel est ainsi atteint pour des états de charge intermédiaire, pouvant généralement aller de 5% à 95% de la charge complète.

Bien entendu, la valeur du plateau de potentiel dépend de la nature du composé électro-actif mis en oeuvre.

Par « état de charge intermédiaire », on entend ainsi selon l'invention un état d'oxydation partielle/réduction partielle (ou encore de lithiation partielle) dudit composé ou matériau électro-actif ou un mélange des formes oxydée et réduite, correspondant au potentiel fixe (plateau de potentiel) de la réaction redox associée au composé électro-actif.

Dans le cas du LiFePO₄, le matériau dans un état de charge intermédiaire est par exemple caractérisé par un comportement biphasique, avec la coexistence de deux phases cristallographiques différentes (phases totalement lithiée et totalement délithiée) identifiables par exemple par analyse par diffraction des rayons X (DRX). Dans le cas d'un matériau de type LiMO₂, cet état de charge intermédiaire se traduit par un phénomène de solution solide, avec le métal M présent à des degrés d'oxydations mixtes (M(III) et M(IV)) dans les cristaux
L'état de charge intermédiaire du matériau (ou mélange) obtenu selon l'invention peut être vérifié par un test en cyclage (charge/décharge) d'une électrode à base dudit matériau, assemblée en demi-cellule ou cellule complète, par exemple en demi-pile, comme illustré dans les exemples.

De manière avantageuse, la composition chimique du matériau actif obtenu selon l'invention peut être ajustée très précisément en contrôlant les proportions en composés sous forme réduite et sous forme oxydée lors du mélange, afin d'atteindre l'état de charge intermédiaire souhaité.

Avantageusement, le matériau actif selon l'invention est obtenu à partir d'un composé électro-actif sous forme réduite ou conjuguée, ledit composé sous la forme conjuguée oxydée ou réduite étant obtenu, préalablement au mélange en étape (3), par oxydation ou réduction chimique totale.

Dans une variante de réalisation particulièrement préférée, comme détaillé dans la suite du texte, le composé électro-actif sous sa forme oxydée (2) est préalablement obtenu à partir dudit composé électro-actif sous sa forme réduite, par oxydation chimique totale à l'aide d'au moins un agent oxydant.

De manière avantageuse, le matériau actif obtenu selon l'invention, en particulier sous la forme d'une poudre, peut être mis en oeuvre pour la préparation d'une électrode de référence directement opérationnelle lorsqu'elle est intégrée au sein d'une cellule d'un système de stockage électrochimique.

L'invention concerne ainsi, selon un autre de ses aspects, l'utilisation d'un matériau actif obtenu selon l'invention, en particulier sous forme de poudre, pour la préparation d'une électrode de référence.

Elle concerne également un procédé de préparation d'une électrode de référence, directement fonctionnelle au sein d'une cellule d'un système de stockage électrochimique, ledit procédé comprenant au moins les étapes consistant en :
(i) préparation d'une dispersion, appelée « encre », comprenant, dans un ou plusieurs solvants aqueux et/ou organiques, ledit matériau actif, en particulier sous la forme d'une poudre, obtenu selon le procédé décrit précédemment ; un ou plusieurs liants et éventuellement un ou plusieurs additifs conducteurs électroniques ;
(ii) dépôt de l'encre à la surface d'un collecteur de courant ;
(iii) évaporation du ou desdits solvant(s) de l'encre pour former le film d'électrode ; et de préférence
(iv) calandrage de l'électrode.

Comme évoqué précédemment, une électrode de référence est définie comme étant une électrode possédant un potentiel électrochimique stable et connu, permettant avantageusement de servir de point de référence pour mesurer indépendamment le potentiel des électrodes positive et négative dans une cellule électrochimique.

Par « directement fonctionnelle », on entend signifier que l'électrode préparée selon l'invention est directement opérationnelle/utilisable comme électrode de référence. Elle peut ainsi être insérée au niveau d'une cellule électrochimique pour former une cellule à trois électrodes et être utilisée comme électrode de référence dès le premier cycle de charge/décharge de la cellule.

En particulier, l'électrode de référence obtenue à l'issue de l'étape (iii) ou (iv) ne nécessite aucune étape d'activation électrochimique, avant de pouvoir servir comme électrode de référence.

De manière avantageuse, le procédé de préparation d'une électrode de référence selon l'invention permet ainsi de s'affranchir de toute étape électrochimique, préalable à l'utilisation de l'électrode comme électrode de référence, qui serait susceptible, comme discuté précédemment, de détériorer l'électrode de référence ou de perturber le fonctionnement du système électrochimique.

Ainsi, le procédé de préparation d'une électrode de référence selon l'invention n'intègre aucune étape électrochimique d'activation, préalablement au fonctionnement de l'électrode de référence au sein d'une cellule à trois électrodes, que ce soit au sein d'une cellule électrochimique distincte de celle dans laquelle l'électrode de référence est destinée à être mise en oeuvre ou au sein de la cellule du système électrochimique dans laquelle elle est utilisée.

Par ailleurs, le procédé de préparation d'une électrode de référence selon l'invention permet avantageusement, en ajustant la composition du matériau actif formé selon l'invention, un très bon contrôle de l'état de charge du matériau d'électrode de référence.

L'électrode de référence fonctionnelle préparée selon le procédé de l'invention peut être mise en oeuvre pour divers systèmes de stockage électrochimique ou générateurs électrochimiques, et notamment pour des batteries métal-ion, par exemple des batteries sodium-ion, lithium-ion, potassium-ion, magnésium-ion ; des batteries lithium-soufre ou lithium-air, et supercondensateurs, par exemple des supercondensateurs hybrides au potassium.

Elle peut ainsi être directement intégrée à une cellule d'un tel système de stockage électrochimique ou générateur électrochimique, pour former une cellule à trois électrodes : une électrode positive, une électrode négative et l'électrode de référence préparée selon l'invention.

L'intégration d'une électrode de référence obtenue selon le procédé de l'invention au sein d'au moins l'une des cellules d'un système de stockage électrochimique ou générateur électrochimique, permet avantageusement d'accéder aux potentiels de chacune des électrodes positive et négative, et ce dès le premier cycle de charge/décharge de la cellule. La connaissance et le suivi des potentiels des électrodes positive et négative permet de pouvoir détecter le cas échéant des défauts potentiels à leur fonctionnement.

Une surveillance des potentiels des électrodes positive et négative au cours du fonctionnement du système de stockage électrochimique, par l'intermédiaire de l'électrode de référence préparée selon l'invention, permet avantageusement une utilisation optimisée dudit système électrochimique, en particulier une utilisation à sa capacité maximale, sans pour autant s'exposer à des risques de dysfonctionnement, et permet ainsi une sûreté améliorée à l'usage dudit système électrochimique.

D'autres caractéristiques, variantes et avantages de la préparation du matériau actif selon l'invention et de sa mise en oeuvre pour la préparation d'une électrode de référence selon l'invention, ressortiront mieux à la lecture de la description, des exemples et figures qui vont suivre, donnés à titre illustratif et non limitatif de l'invention.

### Brève description des dessins

[Fig 1] présente, de manière schématique, en coupe transversale, un exemple d'assemblage 100 des différents éléments, y compris l'électrode de référence préparée selon l'invention, au sein d'une cellule d'un système de stockage électrochimique ;
[Fig 2] présente le diffractogramme obtenu par analyse DRX (diffraction par rayons X) de la poudre préparée en exemple 1.1. par délithiation totale du LiFePO₄ ;
[Fig 3] présente l'évolution du courant (en A) et du potentiel (en V) au cours des cycles de charge/décharge réalisés suivant l'exemple 1.3., avec l'électrode de référence assemblée en demi-pile ;
[Fig 4] présente l'évolution du potentiel (en V *vs* Li⁺/Li) en fonction de la capacité spécifique massique (en mAh/g) lors des deux cycles de charge/décharge réalisés suivant l'exemple 1.3., avec l'électrode de référence assemblée en demi-pile ;
[Fig 5] présente, de manière schématique, la soudure d'une électrode sur une languette de connexion en aluminium comme réalisé en exemple 1 ;
[Fig 6] présente, de manière schématique, la cellule lithium-ion, au format pouch-cell, préparée en exemple 2, comprenant une électrode de référence préparée selon l'invention ;
[Fig 7] présente les courbes d'évolution de la tension de cellule de la batterie lithium-ion, et des potentiels des électrodes positive et négative, en fonction de la capacité, obtenues à l'aide d'une électrode de référence préparée selon l'invention, et à l'aide d'une électrode de référence classique (nécessitant une activation) pour une première décharge à C/10, une première charge à C/2 et une décharge à C/2, comme décrit en exemple 2 ;
[Fig 8] présente les courbes d'évolution de la tension de cellule de la batterie lithium-ion, en charge et décharge galvanostatique, à différents régimes, obtenues à l'aide d'une électrode de référence préparée selon l'invention et une électrode de référence classique, comme décrit en exemple 2.

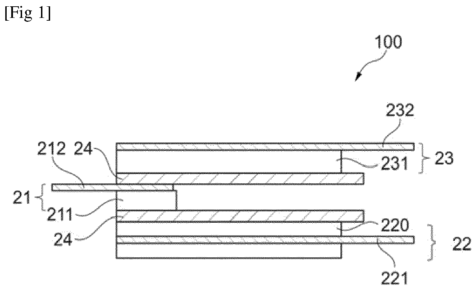

Il convient de noter que, pour des raisons de clarté, les différents éléments sur les figures 1, 5 et 6 sont représentés en échelle libre, les dimensions réelles des différentes parties n'étant pas respectées.

Dans la suite du texte, les expressions « compris entre ... et ... », « allant de ... à ... » et « variant de ... à ... » sont équivalentes et entendent signifier que les bornes sont incluses, sauf mention contraire.

### Description détaillée

### Matériau actif

Comme indiqué précédemment, l'élaboration d'une électrode de référence selon l'invention repose sur la préparation d'un matériau, mélange des formes conjuguées d'au moins un composé électro-actif dont la réaction électrochimique d'oxydo-réduction, dite également réaction rédox, associée au passage réversible de l'état réduit du matériau électro-actif à l'état oxydé, a la particularité de présenter un potentiel électrochimique constant ou plateau de potentiel électrochimique.

Composé électro-actif sous forme réduite et sous forme oxydée (1) et (2)

Le ou les composés électro-actifs à partir desquels est préparée le matériau actif pour l'électrode de référence selon l'invention peuvent être choisis parmi les composés électro-actifs usuellement mis en oeuvre pour former des électrodes de référence activées par voie électrochimique, comme évoqué précédemment.

Comme indiqué précédemment, le matériau actif selon l'invention est plus particulièrement obtenu à partir d'un composé électro-actif sous sa forme oxydée ou réduite, ledit composé sous la forme conjuguée réduite ou oxydée étant obtenu par oxydation chimique totale ou réduction chimique totale.

Selon une première variante de réalisation, le matériau actif d'électrode de référence selon l'invention est obtenu à partir d'au moins un composé électro-actif sous sa forme réduite, et donc apte à être oxydé.

Des composés électro-actifs aptes à être oxydés, pouvant être mis en oeuvre pour la préparation d'un matériau actif selon l'invention, peuvent être par exemple choisis parmi des composés d'intercalation (ou insertion) de type LiMO₂ avec M représentant Co, Ni ou Mn ; LiM'₂O₄ avec M' représentant Ni ou Mn ; et LiM"PO₄ avec M" représentant Fe, Co, Mn ou Ni.

Il peut encore s'agir de composés organiques électro-actifs de type P dont la réaction rédox associée présente un potentiel électrochimique constant.

Par composé « organique », on entend un composé, en particulier de nature moléculaire, oligomérique ou polymérique, de la chimie du carbone, comportant des atomes de carbone et d'hydrogène, et un ou plusieurs hétéroatomes choisis parmi l'oxygène, l'azote, le soufre, le phosphore, ces atomes et hétéroatomes étant uniquement liés par des liaisons covalentes, ce composé pouvant être sous forme d'un sel, par exemple un sel métallique.

Par composé électro-actif « de type P » ou « donneur d'électrons », on entend désigner un composé organique pouvant subir, du fait de la nature de ses fonctions électroactives ou fonctions rédox, une oxydation réversible de l'état neutre vers un état chargé positivement, avec une compensation de charge anionique.

Le mécanisme électrochimique associé à un composé de type P peut être schématisé comme suit :

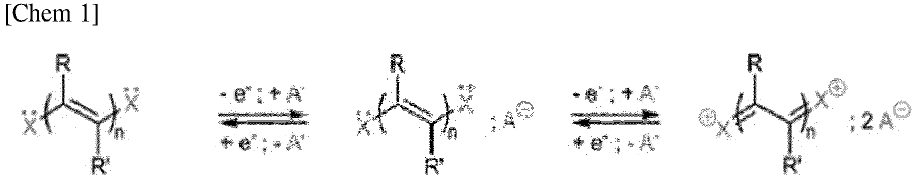

Les composés organiques électro-actifs de type P considérés selon l'invention peuvent être choisis parmi les composés organiques, molécules, oligomères ou polymères organiques, déjà proposés comme matériaux actifs d'électrodes organiques, par exemple pour des batteries. De tels matériaux sont documentés dans la littérature [3].

En particulier, de tels composés organiques électro-actifs de type P peuvent être choisis parmi des composés, en particulier des molécules, oligomères ou polymères, porteurs de fonctions rédox choisies parmi :
- des radicaux stables O^{•}, N^{•} ou NO^{•}, en particulier des fonctions nitroxyde (NO*) ou phénoxy (PhO*) ;

De tels polymères peuvent être par exemple choisis parmi les polymères possédant un squelette linéaire choisi parmi les poly(méth)acrylates, les polythiophènes, les polyfluorènes, les polycarbazoles, les polyanilines, les polyphénylènes, les polyisothionaphtènes, les polyacétylènes, les polyphénylènevinylènes, et leurs copolymères ; et porteurs d'au moins des groupements latéraux possédant au moins un radical stable de type O^{•}, N* ou NO*, en particulier possédant au moins une fonction nitroxyde et/ou phénoxy, en particulier au moins une fonction nitroxyde.

Il peut s'agir par exemple de polymères porteurs de groupements latéraux de structure 2,2,6,6-tétraméthylpipéridinyl-N-oxy (TEMPO), tels qu'un poly(2,2,6,6-tétraméthylpipéridinyloxy-4-yl méthacrylate), noté PTMA.
- des fonctions éther (-O-) ou thioéther (-S-) conjuguées ; tels que le thianthrène, la phénothiazine, et leurs dérivés de type oligomères ou polymères ; les polymères conducteurs π-conjugués de type polythiophène (PT), par exemple le poly(3,4-éthylènedioxythiophène), plus connu sous l'appellation « PEDOT » ;
- des fonctions amines conjuguées, notamment des groupes amines aromatiques ou de type hétéroaryle, tels que la dianiline, la triphénylamine, la polyaniline ou le polypyrrole, des molécules de type viologène ou carbazole, les polyviologènes et polycarbazoles ; et
d'autres polymères conducteurs π-conjugués, tels que les polythiophènes, les polyanilines et les polypyrroles, par exemple les polyacétylènes.

Le composé organique de type P peut se présenter sous différentes formes, pour autant qu'elles autorisent l'oxydation chimique dudit composé organique de type P en présence d'un agent oxydant pour accéder au composé sous sa forme conjuguée (forme oxydée). En particulier, le composé de type P peut se présenter sous une forme telle qu'il ne se dégrade pas, en particulier ne se dissolve pas dans l'électrolyte de la cellule électrochimique dans laquelle l'électrode de référence sera mise en oeuvre.

Plusieurs stratégies sont connues pour insolubiliser les composés organiques rédox.

Comme évoqué ci-dessus, l'une des stratégies les plus couramment utilisées consiste à préparer le composé organique rédox sous la forme de polymères ou copolymères, réticulés ou non, avec des fonctions rédox pendantes ou intramoléculaires.

Une autre stratégie pour insolubiliser les composés organiques électroactifs consiste à réaliser des structures composites par physisorption, avec un substrat inorganique, par exemple en silice, alumine, carbone, au sein desquelles se créent des liaisons faibles (hydrogène, interactions π- π, Van der Waals), permettant de limiter, voire d'empêcher la dissolution du composé organique rédox.

Il est également possible d'effectuer un greffage du composé organique électroactif sur un solide inorganique (silice, alumine, carbone, etc.) *via* des liaisons ioniques ou covalentes, par exemple par réaction acido-basique avec les hydroxyles de la surface de la silice ou par réaction de sels de diazonium, avec la surface du carbone, afin de former un composé hybride organique/inorganique insoluble.

Une autre stratégie consiste encore à ajouter des fonctions ioniques sur le composé organique électroactif, par exemple de type carboxylate, sulfonate, alcoolate, imidure, énolate, etc., permettant de limiter la dissolution du composé en milieu organique.

De préférence, le matériau actif d'électrode de référence selon l'invention est préparé à partir d'un composé électro-actif d'intercalation de type LiMO₂ avec M représentant Co, Ni ou Mn ; LiM'₂O₄ avec M' représentant Ni ou Mn ; et LiM"PO₄ avec M" représentant Fe, Co, Mn ou Ni.

Comme indiqué précédemment, le composé électro-actif sous forme oxydée (2) peut être préalablement obtenu par oxydation chimique totale dudit composé électro-actif de départ sous sa forme réduite, à l'aide d'au moins un agent oxydant.

De préférence, lesdits composés électro-actifs se présentent sous la forme de poudres.

Ainsi, selon un mode de réalisation particulier de l'invention, le procédé de préparation d'un matériau actif d'électrode de référence selon l'invention comprend au moins les étapes suivantes :
- disposer d'une poudre de composé électro-actif sous sa forme réduite, apte à être oxydé, tel que décrit précédemment, en particulier choisi parmi des composés d'intercalation, par exemple du LiFePO₄ ;
- obtenir une poudre dudit composé électro-actif sous sa forme oxydée, par oxydation chimique totale d'une poudre dudit composé électro-actif à l'aide d'au moins un agent oxydant ;
- mélanger les poudres de composé électro-actif sous forme réduite et sous forme oxydée, dans des proportions ajustées pour obtenir une poudre de matériau actif dont la composition correspond à un état de charge intermédiaire.

Bien entendu, la nature de l'agent oxydant, ainsi que les conditions de la réaction d'oxydation, sont ajustées au regard de la nature du composé électro-actif que l'on cherche à oxyder.

A titre d'exemples d'agents oxydants, on peut citer : le tétrafluoroborate de nitronium (NO₂BF₄), le tétrafluoroborate de nitrosyle (NOBF₄), le persulfate de potassium (K₂S₂O₈), le nitrate de sodium (NaNO₃), le nitrile trifluorométhanesulfonate (NO₂CF₃SO₃), le permanganate de potassium (KMnO₄), l'acide nitrique (HNO₃), l'acide sulfurique (H₂SO₄), l'acide peroxydisulfurique (H₂S₂O₈), l'acide peroxymonosulfurique (H₂SO₅), le « Magic Blue » (Tris(4-bromophenyl)aminium hexachloridoantimonate), le peroxyde d'hydrogène (H₂O₂), le dioxyde de plomb (PbO₂), des peracides organiques tels que l'acide métachloroperbenzoïque (mCPBA), des cations métalliques tels que Ce⁴⁺, Ag⁺, Cu²⁺, des gaz tels que O₂, O₃, N₂O, etc.

La réaction d'oxydation peut être réalisée en masse (en l'absence de solvant) ou par voie humide (en présence d'un ou plusieurs solvants).

Il est entendu que la réaction dudit composé électro-actif avec le ou lesdits agents d'oxydation peut être suivie d'une ou plusieurs étapes d'élimination du ou des solvants et/ou de lavage du composé obtenu.

Dans un mode de réalisation particulièrement préféré, le composé électro-actif mis en oeuvre pour la préparation d'un matériau actif d'électrode de référence selon l'invention est choisi parmi les composés d'intercalation de type LiM"PO₄ avec M" représentant Fe, Co, Mn ou Ni.

Avantageusement, il peut s'agir du LiFePO₄ (ou LFP) dont la réaction rédox associé LiFePO₄/FePO₄ présente un plateau de potentiel à environ 3,424 V. Le composé électro-actif sous sa forme oxydée, FePO₄, peut être par exemple obtenu par oxydation à l'aide du NO₂BF₄, en particulier en milieu solvant, de préférence dans l'acétonitrile. Une telle réaction d'oxydation est par exemple décrite dans la publication [2].

Ainsi, selon un mode de réalisation particulier, le composé électro-actif (1) est du LiFePO₄ et le composé électro-actif (2) du FePO₄, en particulier ledit composé électro-actif (2) étant préalablement obtenu par oxydation chimique totale du LiFePO₄ à l'aide d'un agent oxydant, en particulier par réaction avec du NO₂BF₄ dans l'acétonitrile.

Dans un mode de réalisation particulier, la préparation d'un matériau actif pour électrode de référence selon l'invention procède suivant les étapes suivantes :
- disposer d'une poudre de LiFePO₄ ;
- préparer une poudre de FePO₄, par oxydation chimique totale d'une poudre de LiFePO₄ à l'aide d'au moins un agent oxydant, par exemple à l'aide du NO₂BF₄ dans l'acétonitrile ; et
- mélanger lesdites poudres de LiFePO₄ et de FePO₄ dans des proportions ajustées pour obtenir ladite poudre de matériau actif.

Selon une autre variante de réalisation, le matériau actif d'électrode de référence selon l'invention est obtenu à partir d'un composé électro-actif sous sa forme oxydée et donc apte à être réduit.

Des composés électro-actifs aptes à être réduits, pouvant être mis en oeuvre pour la préparation d'un matériau actif selon l'invention, sont par exemple choisis parmi des composés d'intercalation/insertion de type L₁₄T₁₅O₁₂.

Il peut encore s'agir de composés organiques électro-actifs de type N dont la réaction rédox associée présente un potentiel électrochimique constant.

Par composé électro-actif « de type N » ou « accepteur d'électrons », on entend désigner un composé organique pouvant subir, du fait de la nature de ses fonctions électroactives, une réduction réversible de l'état neutre vers un état chargé négativement, avec une compensation de charge cationique.

Le mécanisme électrochimique associé à un matériau de type N peut être schématisé comme suit :

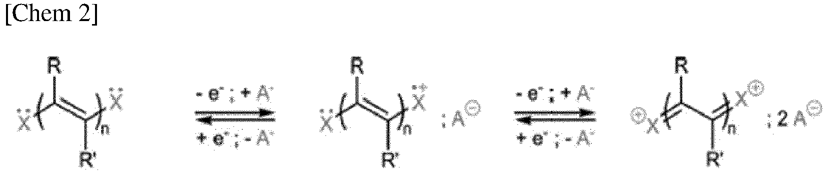

Les composés organiques électro-actifs de type N considérés selon l'invention peuvent être choisis parmi les composés organiques, molécules, oligomères ou polymères organiques, déjà proposés comme matériaux actifs d'électrodes organiques, par exemple pour des batteries, comme décrit dans la publication [3].

En particulier, de tels composés organiques électro-actifs de type N peuvent choisis parmi des composés, en particulier des molécules, oligomères ou polymères, porteurs de fonctions rédox choisies parmi :
- des fonctions azoïques conjuguées (-N=N-) tel que l'azobenzène ou l'un de ses dérivés,
- des fonctions disulfures (-S-S-) tels que les diphényldisulfures, le tétrathionapthtalène, le poly(2,5-dimercapto-1,3,4-thiadiazole), le poly(5,8-dihydro-1H,4H-2,3,6,7-tétrathia-anthracène) ; et
- des fonctions carbonyles conjuguées, en particulier contenues au sein de structures quinonoïdes, comme par exemple l'anthraquinone ; de structures anhydrides comme par exemple l'anhydride pyromellitique, de structures dimides comme par exemple le dimide du pérylène ; ou de structures carboxylates comme par exemple le tétracarboxylate de pérylène.

A titre d'exemple, un composé organique électro-actif de type N peut être par exemple à base du tétracarboxylate de pérylène, également noté PTCLi₄.

Comme évoqué précédemment concernant les composés organiques de type P, le ou lesdits composés organiques de type N, porteurs de motifs rédox tels que considérés ci-dessus, peuvent se présenter sous différentes formes, telles qu'indiquées ci-dessus, pour autant qu'elles autorisent la réduction chimique totale dudit composé organique de type N en présence d'un agent réducteur pour accéder au composé sous sa forme conjuguée (réduite).

De préférence, le matériau actif d'électrode de référence selon l'invention est préparé à partir d'un composé électro-actif d'intercalation du type Li₄Ti₅O₁₂ (ou LTO), dont la réaction rédox associée présente un plateau de potentiel à environ 1,5 V.

Comme indiqué précédemment, le composé électro-actif sous forme réduite (1) peut être préalablement obtenu par réduction chimique totale dudit composé électro-actif de départ sous sa forme oxydée, à l'aide d'au moins un agent réducteur.

Ainsi, selon un mode de réalisation particulier, le procédé de préparation d'un matériau actif d'électrode de référence selon l'invention comprend au moins les étapes suivantes :
- disposer d'une poudre de composé électro-actif sous sa forme oxydée, apte à être réduit, tel que décrit précédemment, en particulier choisi parmi des composés d'intercalation, par exemple du L₁₄T₁₅O₁₂ ;
- obtenir une poudre dudit composé électro-actif sous sa forme réduite, par réduction chimique totale d'une poudre dudit composé électro-actif à l'aide d'au moins un agent réducteur ;
- mélanger les poudres de composé électro-actif sous forme oxydée et sous forme réduite dans des proportions adéquates pour obtenir une poudre de matériau actif dont la composition correspond à un état de charge intermédiaire.

Bien entendu, la nature de l'agent réducteur, ainsi que les conditions de la réaction de réduction, sont ajustées au regard de la nature du composé électro-actif que l'on cherche à réduire.

A titre d'exemples d'agents réducteurs, on peut citer : les métaux alcalins tels que le lithium, le sodium, le potassium ; les hydrures tels que l'hydrure de lithium (LiH) et le borohydrure de sodium (NaBH₄), l'hydrogène, le carbone, des sels tels que le sulfite de sodium (Na₂SO₃), l'hydrosulfite de sodium (Na₂S₂O₄), le thiosulfate de sodium (Na₂S₂O₃), l'hydrazine (N₂H₄), l'iodure de lithium (LiI).

### Mélange pour obtenir le matériau actif

Comme indiqué précédemment, les proportions en composé électro-actif sous forme réduite et en composé électro-actif sous forme oxydée dans le mélange en étape (3) sont ajustées de manière à obtenir un matériau à un état de charge intermédiaire, correspondant au plateau de potentiel de la réaction redox.

Avantageusement, le procédé de l'invention permet de contrôler de manière précise l'état de charge du matériau actif d'électrode *via* l'ajustement des proportions de chacune des formes conjuguées du composé électro-actif.

Les proportions en composé électro-actif sous forme réduite et sous forme oxydée à mettre en oeuvre pour atteindre l'état de charge intermédiaire souhaité peuvent être déterminées par des essais préalables, en faisant varier les proportions des formes conjuguées.

L'état de charge intermédiaire du matériau obtenu selon l'invention peut être vérifié par un test en cyclage (charge/décharge) d'une électrode à base dudit matériau, assemblée en demi-cellule ou cellule complète, par exemple en demi-pile, comme illustré dans les exemples.

Comme indiqué précédemment, le mélange est de préférence opéré par mélange d'une poudre dudit composé électro-actif sous forme réduite et d'une poudre dudit composé électro-actif sous forme oxydée.

En particulier, la poudre du composé électro-actif sous forme réduite peut être constituée du composé électro-actif sous sa forme réduite et la poudre du composé électro-actif sous forme oxydée peut être constituée du composé électro-actif sous sa forme oxydée.

Avantageusement, lesdites poudres présentent une granulométrie similaire, de préférence de taille particulaire moyenne comprise entre 50 nm et 20 µm, en particulier entre 1 µm et 10 µm.

La taille particulaire moyenne peut être évaluée par exemple par granulométrie laser, microscopie électronique à balayage ou diffusion de la lumière.

De préférence, la poudre de matériau actif obtenue selon l'invention, en particulier par mélange des poudres dudit composé électro-actif sous forme oxydée et réduite, présente une granulométrie adaptée pour une mise en oeuvre aisée lors de la formulation de l'encre à base dudit matériau électro-actif pour la préparation de l'électrode de référence.

En particulier, la poudre de matériau actif peut présenter une taille particulaire moyenne comprise entre 50 nm et 20 µm, en particulier entre 1 µm et 10 µm.

Dans le cas particulier de la préparation d'un matériau actif à partir d'un composé électro-actif d'intercalation du type LiMO₂; LiM'₂O₄ ou LiM"PO₄, par exemple de type LiFePO₄, les proportions en composé électro-actif sous forme réduite (LiMO₂; LiM'₂O₄ ou LiM"PO₄) et en composé électro-actif sous forme oxydée ou délithiée (MO₂; M'₂O₄ ou M"PO₄), de préférence sous la forme de poudres, dans le mélange en étape (3) sont ajustées pour obtenir un matériau, en particulier sous la forme de poudre, dont la composition chimique est Li₁₋ₓMO₂; Li₁₋ₓM'₂O₄ ou Li₁₋ₓM"PO₄, par exemple Li₁₋ₓFePO₄, avec 0,30 ≤ x ≤ 0,70, en particulier 0,50 ≤ x ≤ 0,60.

En particulier, la préparation d'un matériau actif de composition Li₁₋ₓFePO₄, avec 0,30 ≤ x ≤ 0,70, fait de préférence intervenir le mélange d'une poudre de LiFePO₄ et d'une poudre de FePO₄ dans un rapport massique LiFePO₄/FePO₄ compris entre 0,05 et 20, en particulier entre 0,5 et 2.

### Mise en oeuvre du matériau actif pour la préparation d'une électrode de référence

Comme indiqué précédemment, le matériau actif formé par le mélange des formes réduite et oxydée dudit composé électro-actif, se présentant de préférence sous la forme d'une poudre, est mis en oeuvre pour la préparation d'une électrode de référence.

L'intégration du matériau actif au niveau d'une électrode peut être opérée par toute méthode conventionnelle de préparation des électrodes.

La formulation dudit matériau actif au niveau d'une électrode peut ainsi comprendre au moins les étapes suivantes :
(i) préparation d'une dispersion, plus couramment appelée « encre », comprenant, dans un ou plusieurs solvants aqueux et/ou organiques, ledit matériau actif à un état de charge intermédiaire ; un ou plusieurs liants et éventuellement un ou plusieurs additifs conducteurs électroniques ;
(ii) dépôt de l'encre à la surface d'un collecteur de courant ;
(iii) évaporation du ou desdits solvant(s) de l'encre pour former le film d'électrode ; et de préférence
(iv) calandrage de l'électrode.

Le solvant de l'encre peut comprendre de l'eau et/ou un ou plusieurs solvants organiques, par exemple de la N-méthyl-2-pyrrolidone.

Les additifs conducteurs électroniques sont mis en oeuvre pour améliorer la conductivité électronique de l'électrode. Ils peuvent être choisis par exemple parmi des fibres de carbone, du noir de carbone, des nanotubes de carbone et leurs mélanges.

Le ou lesdits additifs conducteurs électroniques, lorsqu'ils sont présents, peuvent être mis en oeuvre de préférence en une teneur allant de 1 à 10 % massique, en particulier de 2 à 8 % massique, par rapport à la masse l'électrode. Il est entendu que la masse totale de l'électrode n'inclut pas la masse du collecteur de courant.

Les liants sont mis en oeuvre pour assurer la tenue mécanique de l'électrode sur le collecteur de courant, la cohésion des différents composants de l'électrode ou encore ses propriétés de flexibilité. Ils peuvent être choisis parmi des liants polymères, en particulier choisis parmi les polymères fluorés, par exemple parmi le polytétrafluoroéthylène (PTFE), le polyfluorure de vinylidène (PVDF), les polymères dérivés de carboxyméthylcellulose (CMC), les polysaccharides et les latex notamment de type caoutchouc styrène-butadiène (BR ou en langue anglaise « stryrene-butadiene rubber » (SBR)).

Un liant particulièrement préféré est le poly(fluorure de vinylidène) (PVDF).

Le ou lesdits liants peuvent être présents en une quantité inférieure ou égale à 20 % massique, par rapport à la masse totale de l'électrode, en particulier inférieure ou égale à 10 % massique, notamment comprise entre 1 et 10 % massique, par rapport à la masse totale de l'électrode. Il est entendu que la masse totale de l'électrode n'inclut pas la masse du collecteur de courant.

L'encre peut être homogénéisée avant son étalement.

Le dépôt de l'encre à la surface du collecteur de courant peut être opéré par toute technique connue de l'homme du métier, par exemple par enduction, par une technique d'impression, par extrusion ou par colaminage.

Le collecteur de courant peut être plein, par exemple sous la forme d'un feuillard ou sous la forme d'une grille.

Le collecteur de courant peut être en un matériau métallique choisi parmi le cuivre, l'aluminium, le nickel ou l'inox potentiellement revêtu de carbone.

L'évaporation du ou des solvants de l'encre peut être opérée par séchage, par exemple à l'étuve, à une température comprise entre 20 et 150 °C, notamment entre 50 et 80°C, en particulier pendant une durée comprise entre 1 et 15 heures.

De préférence, l'étape de séchage de l'encre est suivie d'une étape de calandrage.

Ledit matériau actif peut représenter de 5 à 98 % massique, en particulier au moins 30 % massique, notamment au moins 50 % massique et plus particulièrement de 70 à 96 % massique, par rapport à la masse totale de l'électrode, exclusion faite de la masse du collecteur de courant.

Le grammage de l'électrode, autrement dit la masse de matériau actif formé selon l'invention, par unité de surface, peut être ajusté en contrôlant le taux de matériau actif et l'épaisseur de dépôt, notamment d'enduction, de l'encre formulée sur le collecteur de courant. De préférence, le grammage de l'électrode est compris entre 0,1 mg/cm² et 50 mg/cm², en particulier entre 1 mg/cm² et 30 mg/cm², et plus particulièrement entre 3 mg/cm² et 10 mg/cm².

### SYSTEME DE STOCKAGE ELECTROCHIMIQUE

Comme indiqué précédemment, l'électrode préparée à partir du matériau actif obtenu selon l'invention est directement fonctionnelle comme électrode de référence. Autrement dit, elle peut être utilisée comme électrode de référence, sans étape préalable, au sein d'une cellule d'un système de stockage électrochimique ou générateur électrochimique.

En particulier, le procédé de préparation d'une électrode de référence selon l'invention ne comprend aucune étape d'activation par voie électrochimique de l'électrode obtenue à l'issue de l'étape (iii) ou (iv), préalablement à son fonctionnement comme électrode de référence.

Les systèmes de stockage électrochimique, dans lesquels une électrode de référence obtenue selon l'invention peut être incorporée, peuvent être divers. Il peut s'agir d'une batterie métal-ion, notamment des batteries au sodium, au lithium, au potassium, au magnésium ; d'une batterie lithium-soufre ou lithium-air.

Il peut encore s'agir d'un supercondensateur, en particulier d'un supercondensateur « standard » ou d'un supercondensateur dit « hybride », en particulier d'un supercondensateur hybride au potassium.

La cellule du système de stockage électrochimique peut comprendre typiquement une électrode positive, une électrode négative et un électrolyte, notamment imprégnant une membrane poreuse séparant lesdites électrodes.

Il peut également s'agir d'une cellule à base d'une membrane électrolyte céramique, ou encore à base d'un électrolyte solide, par exemple d'un électrolyte polymérique solide ou électrolyte solide hybride.

L'électrode de référence préparée selon le procédé de l'invention est ainsi intégrée en tant que troisième électrode au niveau de la cellule du système de stockage électrochimique.

L'invention concerne ainsi, selon un autre de ses aspects, un procédé de préparation d'une cellule d'un système de stockage électrochimique, par exemple d'une batterie au lithium, comprenant une étape de préparation d'une électrode de référence selon le procédé tel que décrit précédemment, suivie d'une étape d'intégration de ladite électrode de référence au niveau d'une cellule du système de stockage électrochimique pour obtenir une cellule à trois électrodes.

Une cellule d'un système de stockage électrochimique, au sein de laquelle une électrode de référence obtenue selon l'invention est utilisée, est ainsi un système à trois électrodes, comportant plus particulièrement :
- une électrode positive ;
- une électrode négative ; et
- ladite électrode de référence préparée selon le procédé de l'invention tel que décrit précédemment.

La nature des éléments constituant la cellule du système de stockage électrochimique, en particulier des électrodes positive et négative et de l'électrolyte, dépend bien entendu du type de dispositif considéré, suivant qu'il s'agisse d'une batterie métal-ion, d'une batterie lithium-soufre, lithium-air, d'un supercondensateur, etc.

Le ou lesdits matériau(x) actif(s) de l'électrode négative peu(ven)t être notamment choisi(s) parmi du carbone activé, des matériaux carbonés d'intercalation d'un élément alcalin tel que du graphite ; du silicium ; des matériaux de conversion du type MO₂ avec M représentant par exemple Sn (SnO₂), Si (SiO₂), ou du type M₃O₄ avec M représentant par exemple Co (Co₃O₄), Mn (Mn₃O₄) etc., des métaux (Li, Na, K, Mg, Ca) et alliages à base de ces métaux, des oxydes de titane de type L₁₄T₁₅O₁₂.

Le ou lesdits matériau(x) actif(s) de l'électrode positive peu(ven)t être notamment choisi(s) parmi du carbone activé, du LiMO₂ ou LiM₂O₄ avec M représentant Mn, Co, Ni ou l'une de leurs combinaisons, par exemple du LiNi_{0,6}Mn_{0,2}Co_{0,2}O₂ ; du LiMPO₄ avec M représentant Fe, Mn ou une de leurs combinaisons.

L'exemple qui suit, en référence à la mise en oeuvre d'une électrode de référence préparée selon le procédé de l'invention au niveau d'une cellule d'une batterie lithium-ion, est ainsi donné uniquement à titre illustratif de l'invention, étant entendu que l'utilisation d'une électrode de référence obtenue selon l'invention n'est aucunement limitée à ce mode particulier de mise en oeuvre.

Ainsi, à titre d'exemple de mise en oeuvre, une électrode de référence préparée selon le procédé de l'invention est introduite au niveau d'une batterie au lithium, en particulier d'une batterie lithium-ion.

Une électrode de référence préparée selon l'invention peut être par exemple mise en oeuvre au niveau d'une cellule d'une batterie lithium-ion comportant par ailleurs :
- une électrode positive comprenant un matériau actif positif, par exemple du LiNi_{0,6}Mn_{0,2}Co_{0,2}O₂ ;
- une électrode négative comprenant un matériau actif négatif, par exemple à base de graphite ; et
- un électrolyte comprenant au moins un sel de lithium par exemple du LiPF₆, dans un ou plusieurs solvants organiques, par exemple choisi parmi des solvants carbonates, tels que du carbonate d'éthylène (EC), du carbonate de diéthyle (DEC) et/ou du carbonate de diméthyle (DMC).

Il est entendu que les différents éléments sont assemblés au sein de la cellule du système de stockage électrochimique, par exemple de la batterie ou du supercondensateur, de sorte, d'une part, à permettre une utilisation efficace de l'électrode de référence, par exemple à des fins de connaître les potentiels des électrodes positive et négative et, d'autre part, de sorte que la présence de cette troisième électrode n'interfère pas négativement au niveau du fonctionnement de la cellule dudit système de stockage électrochimique.

En particulier, l'électrode de référence peut être utilisée lorsque la cellule dudit système de stockage électrochimique est soumise à un cyclage pour des courants allant de C/100 à 100C, notamment de C/50 à 100C, et plus particulièrement de C/50 à 5C, en particulier de C/2 à 5C, à des températures allant de -40°C à 100°C.

D'une manière générale, les différentes électrodes de la cellule du système de stockage électrochimique sont séparées les unes des autres par une membrane poreuse, dite encore « séparateur », imprégnée par l'électrolyte.

De tels séparateurs poreux peuvent être par exemple en polyéthylène, en polypropylène. La cellule du système de stockage électrochimique peut présenter avantageusement une configuration de couches superposées. Autrement dit, l'assemblage de la cellule peut être réalisé par empilement des différents éléments sous la forme de couches.

Chacune des électrodes d'une cellule du système de stockage électrochimique peut se présenter sous la forme d'une couche du matériau d'électrode, déposée sur au moins l'une des faces ou sur les deux faces d'un collecteur de courant se présentant sous la forme d'un film mince, par exemple sous la forme d'un feuillard métallique.

Selon une variante de réalisation, dans le cas d'une architecture de la cellule du système de stockage électrochimique sous la forme d'un empilement des différents éléments, l'électrode de référence peut être positionnée entre les électrodes positive et négative.

La Figure 1 représente, de manière schématique, en coupe transversale, un exemple d'assemblage 100 des différents éléments, intégrant une électrode de référence préparée selon l'invention, au sein d'une cellule d'un système de stockage électrochimique, à l'image par exemple de la cellule d'une batterie métal-ion.

Comme représenté sur cette figure, dans une variante de réalisation, une cellule d'un système de stockage électrochimique, par exemple d'une batterie métal-ion, dans laquelle une électrode de référence préparée selon l'invention est incorporée, peut comporter l'assemblage 100 des différents éléments suivants, dans cet ordre d'empilement :
- une électrode positive 22, en particulier formée d'une couche de matériau actif 220 sur un collecteur de courant 221, par exemple en aluminium ;
- un séparateur poreux 24, par exemple en polypropylène, destiné à être imprégné par l'électrolyte ;
- ladite électrode de référence 21, préparée comme décrit précédemment, formée d'une couche 211 du matériau d'électrode incorporant ledit matériau actif préparé selon l'invention à un état de charge intermédiaire, au niveau d'un collecteur de courant 212, par exemple en aluminium ;
- un séparateur poreux 24, par exemple en polypropylène, destiné à être imprégné par l'électrolyte ; et
- une électrode négative 23, en particulier formée d'une couche de matériau actif 231 sur un collecteur de courant 232, par exemple en aluminium.

Au sein de la cellule du système électrochimique, l'assemblage est trempé par un électrolyte comportant au moins un sel de métal alcalin ou alcalino-terreux, par exemple un sel de lithium dans le cas d'une batterie au lithium, dans un ou plusieurs solvants aqueux ou organiques.

Les séparateurs poreux assurent une isolation électronique entre les électrodes, tout en permettant un passage facile des ions de l'électrolyte. Bien entendu, d'autres configurations sont envisageables. Par exemple, il est possible d'enfermer l'électrode de référence dans un séparateur replié sur lui-même.

L'électrode de référence 21 préparée selon l'invention, intercalée au sein de l'assemblage entre les électrodes positive 22 et négative 23, présente avantageusement une surface dans un plan orthogonal à la direction d'empilement des différents éléments (électrodes et séparateurs), réduite comparativement aux surfaces des électrodes positive et négative dans ce même plan. De préférence, l'aire projetée de l'électrode de référence dans un plan orthogonal à la direction d'empilement, ne dépasse pas 10 %, en particulier 5 %, de l'aire projetée dans ce même plan des électrodes positive et négative.

L'invention n'est pas limitée à l'agencement représenté en figure 1. D'autres assemblages peuvent être considérés, pour autant qu'ils permettent d'assurer à la fois le fonctionnement de la cellule du système de stockage électrochimique et l'utilisation de l'électrode de référence. Des exemples de configuration de cellules à trois électrodes sont par exemple décrit dans le document US 9,379,418.

Une électrode de référence préparée selon l'invention peut avantageusement être mise en oeuvre dans la fabrication de batteries entièrement solides (batteries « tout solide »).

Avantageusement, une électrode de référence préparée selon l'invention peut être mise en oeuvre dans des cellules de formats divers : cellules bobinées ou en stacking (empilage), en emballage rigide ou souple, en format prismatique ou cylindrique, etc.

Dans un mode de réalisation particulier, une électrode de référence préparée selon l'invention peut être intégrée dans une cellule d'un système de stockage électrochimique conditionnée dans un format prismatique, et en particulier sous la forme d'une « pouch cell » comme illustré dans les exemples. Une telle cellule « pouch cell » présente notamment un emballage flexible en aluminium-plastique.

De manière avantageuse, l'intégration d'une électrode de référence au niveau d'au moins l'une des cellules du système de stockage électrochimique permet de surveiller les potentiels des électrodes positive et négative, simultanément ou non, de manière continue, périodique, aléatoire ou à des moments prédéterminés, au cours du fonctionnement du système de stockage électrochimique.

Ainsi, la différence de potentiel entre l'électrode positive (respectivement, l'électrode négative) et l'électrode de référence permet de mesurer et de surveiller le potentiel de l'électrode positive (respectivement, l'électrode négative) par rapport à une valeur connue de potentiel, pendant le fonctionnement du supercondensateur.

Les branchements et circuits électriques externes à l'assemblage ne sont pas représentés sur les figures.

Le circuit externe entre l'électrode positive (respectivement, l'électrode négative) et l'électrode de référence peut être connecté électriquement à un moniteur de tension pour permettre d'indiquer ou d'enregistrer le potentiel de l'électrode positive (respectivement, l'électrode négative).

L'invention va maintenant être décrite au moyen des figures et exemples suivants, donnés bien entendu à titre illustratif et non limitatif de l'invention.

### EXEMPLE 1

### Préparation d'une électrode de référence selon le procédé de l'invention

### 1.1. Délithiation chimique totale du LiFePO₄

2,5 g de matériau LiFePO₄ sont dispersés sous atmosphère d'argon dans 100 mL d'acétonitrile. 2,53 g de NO₂BF₄ (1,2 eq) est ajouté, puis le milieu réactionnel est agité pendant 48 heures, à température ambiante.

La suspension est ensuite filtrée, puis la poudre est lavée avec 4 x 100 mL d'acétronitrile avant d'être séchée à 60°C pendant 12 heures. 1,9 g de poudre noire sont obtenus.

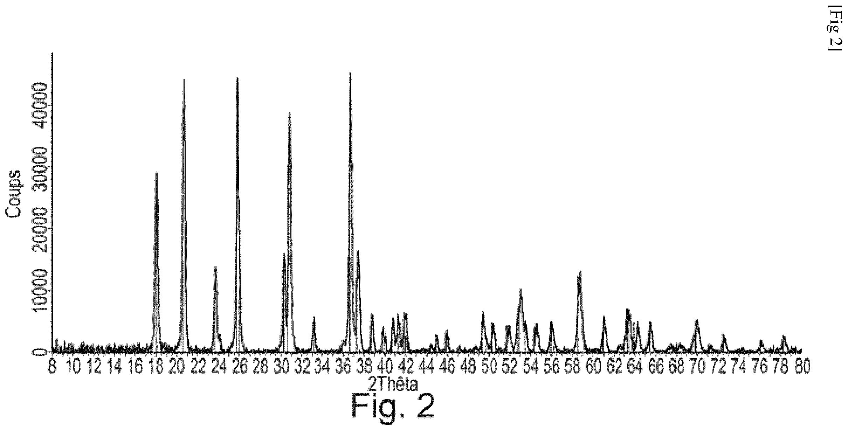

La poudre ainsi préparée a été caractérisée par DRX (Figure 2).

Le diffractogramme obtenu témoigne de la seule présence de la phase FePO₄.

### 1.2. Préparation du matériau actif, mélange des poudres 75% massique LiFePO₄/ 25% massique FePO₄

1,94 g de poudre de FePO₄ préparée en étape 1.1 et 5,82 g de poudre de LiFePO₄ ont été mélangés dans un mortier pour obtenir la poudre de matériau actif d'électrode.

### 1.3. Préparation d'une électrode de référence déposée sur un collecteur d'aluminium

Une encre composée de 90,5% du matériau, mélange des poudres, préparé en étape 1.2. ; 5% de fibres de carbone VGCF (« vapor grown carbon fiber ») et 4,5% de liant polyfluorure de vinylidène (PVDF) a été préparée dans la N-méthylpyrrolidone et enduite sur un collecteur en aluminium.

Après séchage et pressage à 10 tonnes, l'électrode a été assemblée en demi-pile avec une contre-électrode de lithium métallique. Deux cycles de charge/décharge ont été réalisés à un régime C/10.

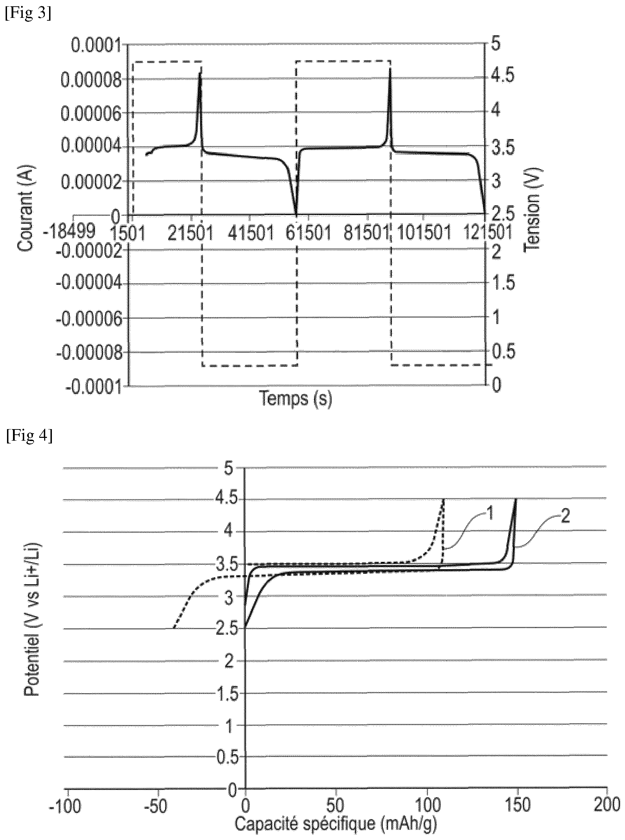

La figure 3 présente l'évolution du voltage et du courant avec le temps. La figure 4 présente l'évolution du potentiel (V vs Li⁺/Li) avec la capacité spécifique (mAh/g), au cours des deux premiers cycles.

Ce test montre que le potentiel de départ de l'électrode est de 3,45V vs Li⁺/Li, et donc bien sur le plateau de potentiel, et que l'état de charge de l'électrode est de 25%.

La composition globale du matériau d'électrode est donc Li_{0.25}FePO₄.

### 1.4. Préparation d'une électrode de référence sur une grille d'aluminium

Une encre composée de 90,5% du matériau, mélange des poudres, préparé en étape 1.2. ; 5% de fibres de carbone VGCF et 4,5% de liant PVDF a été préparée dans la N-méthylpyrrolidone et enduite sur une grille d'aluminium.

Après séchage, les grilles enduites sont calandrées jusqu'à atteindre une épaisseur d'environ de 50 µm.

Après calandrage des grilles d'aluminium enduites, les électrodes de référence sont ensuite découpées.

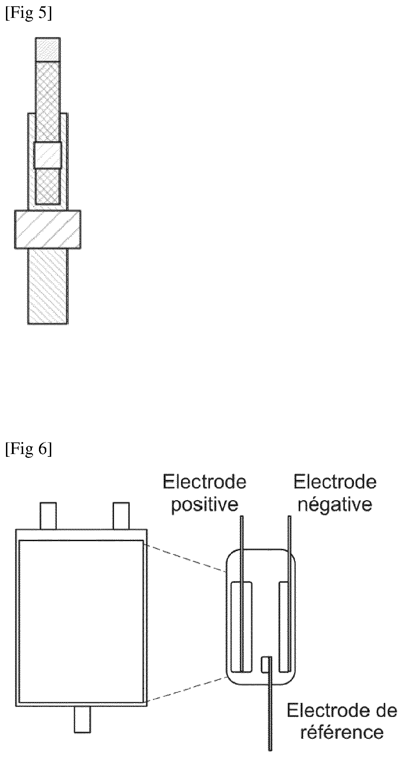

Les électrodes découpées sont soudées aux ultrasons sur des languettes de connexion en aluminium, comme représenté schématiquement en figure 5.

### EXEMPLE 2

### Mise en oeuvre de l'électrode de référence au niveau d'une cellule d'une batterie

L'électrode de référence est introduite au niveau d'une cellule de batterie lithium-ion.

La réalisation du montage est effectuée au format « pouch cell », à partir des électrodes suivantes :
- l'électrode de référence préparée selon l'exemple 1.4 précité, prête à l'usage ;
- une électrode positive à base de LiNi_{0,6}Mn_{0,2}Co_{0,2}O₂ (2,9 mAh/cm²) ;
- une électrode négative à base de graphite (3,2 mAh/cm²).

Les électrodes sont séparées par deux séparateurs Celgard^{®}, et l'ensemble est imprégné d'un électrolyte à base de carbonate d'éthylène (EC)/ éthyl méthyl carbonate (EMC) (EC :EMC 3 :7 (Vol)), du sel LiPF₆ (1 M) et 2 % massique de carbonate de vinylène (VC).

La figure 6 représente schématiquement la cellule au format pouch-cell ainsi obtenue.

Les performances de la cellule sont comparées avec celles de cellules similaires incorporant une électrode de référence classique à base de LiFePO₄ et nécessitant d'être activée au préalable.

Cette électrode de référence est une électrode de référence en LFP avec les mêmes paramètres d'encre et d'enduction que celle de l'invention, la seule différence étant que le LFP est incorporé à son état initial, et n'est pas issu d'un mélange matériau lithié + matériau délithié selon l'invention. Après fabrication, la cellule a été chargée à C/10, puis l'électrode de référence a été activée électrochimiquement.

La cellule intégrant une électrode de référence formée selon l'invention et la cellule intégrant une électrode de référence classique, sont soumis aux mêmes essais électrochimiques à 25°C, à savoir :
- Etape de formation (pour l'électrode comparative non activée)
- Décharge galvanostatique à différents régimes
- Charge galvanostatique à différents régimes.

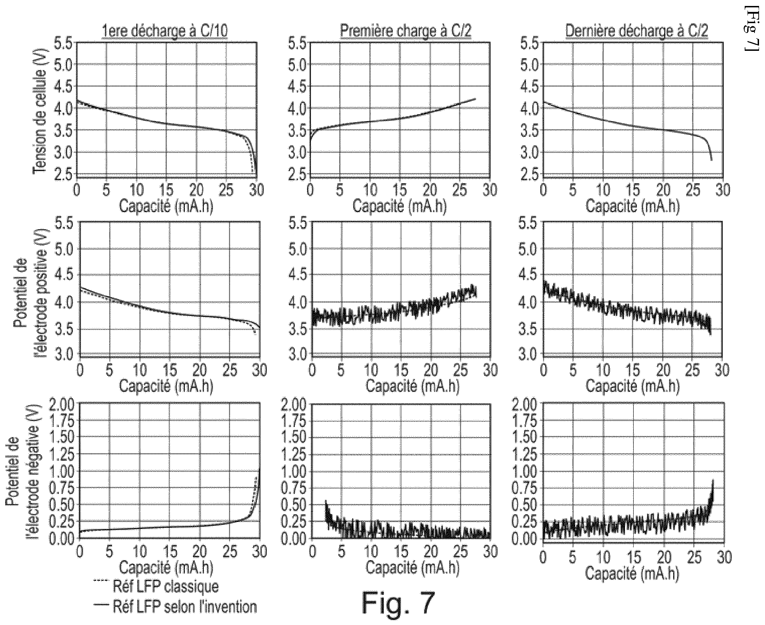

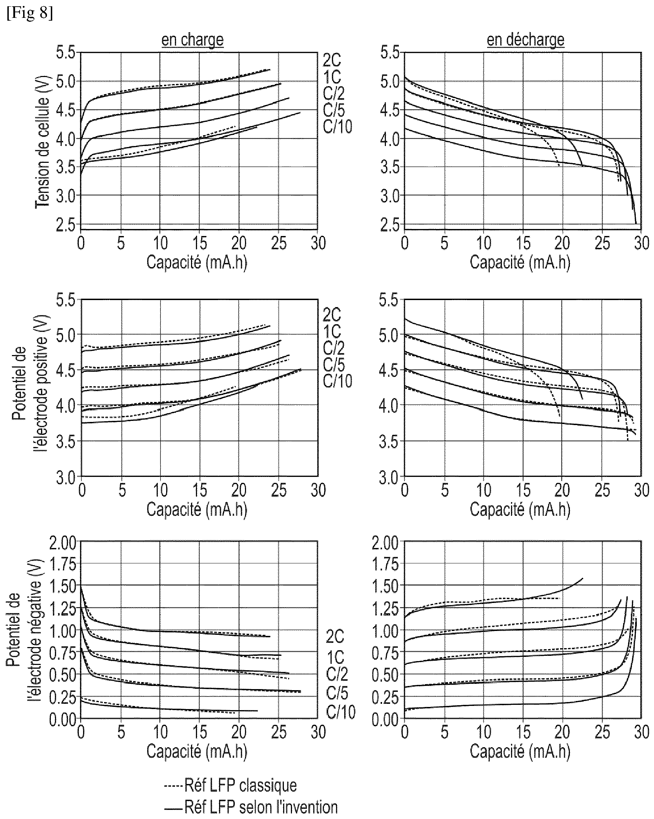

Les figures 7 et 8 présentent les courbes d'évolution du potentiel (V) avec la capacité (mAh.h) pour une première décharge à C/10, une première charge à C/2 et une dernière décharge à C/2, ainsi que pour différents régimes en charge et en décharge.

Ces essais montrent que les résultats obtenus sont comparables entre les cellules intégrant les électrodes de référence classiques et la cellule intégrant l'électrode de référence préparée selon l'invention.

En revanche, l'électrode de référence ne nécessite pas d'être activée avant d'être utilisable, contrairement aux électrodes de référence classiques.

Ainsi, les données peuvent être obtenues dès la première charge dite « étape de formation » dans le cas des électrodes classiques. En revanche, dans le cas d'une électrode de référence classique, nécessitant d'être préalablement activée au sein de la cellule dans laquelle elle est mise en oeuvre, la cellule subit tout d'abord une première charge ou « étape de formation », durant laquelle l'électrode de référence n'est pas utilisable.

### Références

[1] Cengiz et al., J. Electrochem. Soc. 2021 ;
[2] Yamada et al. Electrochem. Solid State Lett., 2005;
[3] Poizot et al., Chem. Rev. https://dx.doi.org/10.1021/acs.chemrev.9b00482.

## Revendications

1. Procédé de préparation d'un matériau actif pour une électrode de référence, comprenant au moins les étapes consistant en :
(1) disposer d'au moins un composé électro-actif sous sa forme réduite, et dont la réaction rédox associée présente un potentiel électrochimique constant pour des états de charge intermédiaire ;
(2) disposer dudit composé électro-actif sous sa forme oxydée ; et
(3) mélanger les formes réduite et oxydée dudit composé électro-actif dans des proportions ajustées pour obtenir un matériau dont la composition correspond à un état de charge intermédiaire.

2. Procédé selon la revendication précédente, dans lequel ledit composé électro-actif sous sa forme réduite est choisi parmi :
• des composés d'intercalation de type LiMO₂ avec M représentant Co, Ni ou Mn ; LiM'₂O₄ avec M' représentant Ni ou Mn ; LiM"PO₄ avec M" représentant Fe, Co, Mn ou Ni ; et
• des composés organiques électro-actifs de type P dont la réaction rédox associée présente un potentiel électrochimique constant, en particulier choisis parmi des composés, en particulier des molécules, oligomères ou polymères, porteurs de fonctions rédox choisies parmi :
- des radicaux stables O^{•}, N* ou NO*, en particulier des fonctions nitroxyde (NO*) ou phénoxy (PhO*) ; tels que par exemple des polymères porteurs de groupements latéraux de structure 2,2,6,6-tétraméthylpipéridinyl-N-oxy (TEMPO) ;
- des fonctions éther (-O-) ou thioéther (-S-) conjuguées ; tels que le thianthrène, la phénothiazine, et leurs dérivés de type oligomères ou polymères; les polymères conducteurs π-conjugués de type polythiophène (PT), par exemple le poly(3,4-éthylènedioxythiophène) ;
- des fonctions amines conjuguées, notamment des groupes amines aromatiques ou de type hétéroaryle, tels que la dianiline, la triphénylamine, la polyaniline ou le polypyrrole, des molécules de type viologène ou carbazole, les polyviologènes et polycarbazoles ; et d'autres polymères conducteurs π-conjugués, tels que les polyacétylènes.

3. Procédé selon la revendication 1 ou 2, dans lequel le composé électro-actif sous sa forme oxydée (2) est préalablement obtenu à partir dudit composé électro-actif sous sa forme réduite, par oxydation chimique totale à l'aide d'au moins un agent oxydant, par exemple choisi parmi le tétrafluoroborate de nitronium (NO₂BF₄), le tétrafluoroborate de nitrosyle (NOBF₄), le persulfate de potassium (K₂S₂O₈), le nitrate de sodium (NaNO₃), le nitrile trifluorométhanesulfonate (NO₂CF₃SO₃), le permanganate de potassium (KMnO₄), l'acide nitrique (HNO₃), l'acide sulfurique (H₂SO₄), l'acide peroxydisulfurique (H₂S₂O₈), l'acide peroxymonosulfurique (H₂SO₅), le « Magic Blue » (Tris(4-bromophenyl)aminium hexachloridoantimonate), le peroxyde d'hydrogène (H₂O₂), le dioxyde de plomb (PbO₂), des peracides organiques tels que l'acide métachloroperbenzoïque (mCPBA), des cations métalliques tels que Ce⁴⁺, Ag⁺, Cu²⁺, des gaz tels que O₂, O₃, N₂O.

4. Procédé selon la revendication 1, dans lequel ledit composé électro-actif sous sa forme oxydée est choisi parmi :
• des composés d'intercalation de type L₁₄T₁₅O₁₂ ; et
• des composés organiques électro-actifs de type N dont la réaction rédox associée présente un potentiel électrochimique constant, notamment choisis parmi des composés, en particulier des molécules, oligomères ou polymères, porteurs de fonctions rédox choisies parmi :
- des fonctions azoïques conjuguées (-N=N-) tel que l'azobenzène ou l'un de ses dérivés,
- des fonctions disulfures (-S-S-) tels que les diphényldisulfures, le tétrathionapthtalène, le poly(2,5-dimercapto-1,3,4-thiadiazole), le poly(5,8-dihydro-1H,4H-2,3,6,7-tétrathia-anthracène) ; et
- des fonctions carbonyles conjuguées, en particulier contenues au sein de structures quinonoïdes, comme par exemple l'anthraquinone ; de structures anhydrides comme par exemple l'anhydride pyromellitique, de structures dimides comme par exemple le dimide du pérylène ; ou de structures carboxylates comme par exemple le tétracarboxylate de pérylène.

5. Procédé selon la revendication 1 ou 4, dans lequel le composé électro-actif sous sa forme réduite (1) est préalablement obtenue à partir dudit composé électro-actif sous sa forme oxydée, par réduction chimique totale à l'aide d'au moins un agent réducteur, en particulier choisi parmi les métaux alcalins tels que le lithium, le sodium, le potassium ; les hydrures tels que l'hydrure de lithium (LiH) et le borohydrure de sodium (NaBH₄), l'hydrogène, le carbone, des sels tels que le sulfite de sodium (Na₂SO₃), l'hydrosulfite de sodium (Na₂S₂O₄), le thiosulfate de sodium (Na₂S₂O₃), l'hydrazine (N₂H₄), l'iodure de lithium (LiI).

6. Procédé selon l'une quelconque des revendications précédentes, dans lequel le composé électro-actif (1) est du LiFePO₄ et le composé électro-actif (2) du FePO₄, en particulier ledit composé électro-actif (2) étant préalablement obtenu par oxydation chimique totale du LiFePO₄ à l'aide d'un agent oxydant, en particulier par réaction avec du NO₂BF₄ dans l'acétonitrile.

7. Procédé selon la revendication précédente, dans lequel les proportions en composé électro-actif sous forme oxydée et en composé électro-actif sous forme réduite, de préférence sous la forme de poudres, sont ajustées pour obtenir un matériau, en particulier sous la forme de poudre, de composition chimique Li₁₋ₓFePO₄, avec 0,30 ≤ x ≤ 0,70, en particulier 0,50 ≤ x ≤ 0,60.

8. Procédé selon l'une quelconque des revendications précédentes, dans lequel lesdits composés électro-actifs se présentent sous la forme de poudres, le matériau actif en étape (3) étant obtenu par mélange desdites poudres.

9. Matériau actif pour électrode de référence, obtenu selon le procédé de l'une quelconque des revendications 1 à 8.

10. Matériau actif selon la revendication 9, sous la forme d'une poudre, comprenant :
(1) des particules dudit composé électro-actif sous sa forme réduite;
(2) des particules dudit composé électro-actif sous sa forme oxydée ;
les proportions en particules (1) et (2) étant telles que la composition chimique de ladite poudre correspond à un état de charge intermédiaire.

11. Utilisation d'un matériau actif obtenu selon le procédé de l'une quelconque des revendications 1 à 8, pour la préparation d'une électrode de référence.

12. Procédé de préparation d'une électrode de référence, directement fonctionnelle au sein d'une cellule d'un système de stockage électrochimique, ledit procédé comprenant au moins les étapes consistant en :
(i) préparation d'une dispersion, appelée « encre », comprenant, dans un ou plusieurs solvants aqueux et/ou organiques, un matériau actif, en particulier sous la forme d'une poudre, obtenu selon le procédé de l'une quelconque des revendications 1 à 8 ; un ou plusieurs liants et éventuellement un ou plusieurs additifs conducteurs électroniques ;
(ii) dépôt de l'encre à la surface d'un collecteur de courant ;
(iii) évaporation du ou desdits solvant(s) de l'encre pour former le film d'électrode ; et de préférence
(iv) calandrage de l'électrode.
